# EUROPÄISCHE PATENTSCHRIFT

(11) **EP 0 796 882 B1**
(45) Veröffentlichungstag und Bekanntmachung des Hinweises auf die Patenterteilung: **27.08.2003**
(21) Anmeldenummer: 97103938.3
(22) Anmeldetag: 10.03.1997
(51) Int. Cl.: C08G 77/60, C09D 183/16, C08G 18/38, C08G 18/80, C09D 5/03

(54) **Mischungen, enthaltend A) Reaktionsprodukte aus Isocyanaten mit NCO-reaktiven Silanen und B) Carbosilan-Dendrimere, ein Verfahren zur Herstellung von Pulverlacken aus den Mischungen und deren Verwendung**
Mixtures containing A) reaction products of isocyanates with isocyanate-reactive silanes and B) carbosilane-dendrimers, a process for the preparation of powder coatings from the mixtures and their use
Mélanges contenant A) des produits de réaction d'isocyanates avec des silanes à groupes réactifs avec de l'isocyanate et B) des dendrimères à groupes carbosilane, procédé de préparation de revêtements en poudre à partir des mélanges et leur utilisation

(30) Priorität: 22.03.1996 DE 19611368
(43) Veröffentlichungstag der Anmeldung: 24.09.1997
(73) Patentinhaber: BAYER AG, 51368 Leverkusen (DE)
(72) Erfinder: Meier, Helmut-Martin, Dr., 40883 Ratingen (DE); Mager, Michael, Dr., 51375 Leverkusen (DE); Dierksen, Karsten, Dr., 51107 Köln (DE); Reuter, Knud, Dr., 47800 Krefeld (DE)

(56) Entgegenhaltungen:
- EP-A- 0 743 313
- WO-A-97/02304
- US-A- 5 157 095
- MUZAFAROV A M ET AL: "ORGANOSILICON DENDRIMERS: VOLUME-GROWING POLYALLYLCARBOSILANES" POLYMER SCIENCE, Bd. 35, Nr. 11, 1.November 1993, Seiten 1575-1580, XP000420830

## Beschreibung

Die vorliegende Erfindung betrifft Mischungen, enthaltend A) Reaktionsprodukte aus Isocyanaten mit NCO-reaktiven Silanen und B) Carbosilan-Dendrimere, ein Verfahren zur Herstellung von Pulverlacken aus den Mischungen und deren Verwendung.

Im Lacksektor finden verstärkt Siliconkomponenten Einzug, da diese zu einer erhöhten Beständigkeit gegenüber Wärme, UV-Licht, Lösemittel und Chemikalien, sowie einer höheren Kratzfestigkeit führen. So werden bereits in US-A-3632557 isocyanatgruppenhaltige Alkoxysilane mit Erfolg eingesetzt. Für diese Lacksysteme ist jedoch ein Lösemittel unumgänglich. Aufgrund der ökologischen Vorteile wird im Lacksektor verstärkt auf feste Systeme, d.h. Pulverlacke zurückgegriffen. Bislang gelang es jedoch nicht, Pulverlacke auf Basis siliconhaltiger Bindemittel bereitzustellen.

Aufgabe der vorliegenden Erfindung war daher die Bereitstellung von siliconhaltigen Mischungen, die als Pulver einsetzbar sind, die einen Schmelzpunkt von weniger als 230°C aufweisen, die auch bei Lagerung rieselfähig bleiben und insbesondere als Beschichtung oder Klebstoff einsetzbar sind.

Überraschenderweise wurde nun gefunden, daß Mischungen, enthaltend A) Reaktionsprodukte aus Isocyanaten mit NCO-reaktiven Silanen und B) Carbosilan-Dendrimere, diese Eigenschaften aufweisen.

Gegenstand der Erfindung sind daher Mischungen, enthaltend A) mindestens ein Reaktionsprodukt aus mindestens einem Isocyanat mit mindestens einer Verbindung der Formel I

Y-R²-Si(R³)ₙ(OR⁴)₃₋ₙ

mit
- Y =: NHR¹, OH, bevorzugt NHR¹, mit
- R¹ =: H, C₁-C₁₈-Alkyl, C₅-C₈-Cycloalkyl, C₆-C₁₀-Aryl, C₇-C₁₂-Aralkyl, bevorzugt H,
- R² =: C₁-C₅-Alkylen
- R³, R⁴ =: C₁-C₁₈-Alkyl oder Alkoxyalkylen mit bis zu 5 Kohlenstoffatomen, n = 0, 1, 2,
und B) mindestens ein Carbosilan-Dendrimer mit kondensationsvernetzenden Endgruppen.

Isocyanate sind dabei vorzugsweise mono-, di- und polyfunktionelle Verbindungen, wie z.B. Phenylisocyanat, 2,4-Toluylendiisocyanat, 2,6-Toluylendiisocyanat, 4,4'-Diphenylmethandiisocyanat, deren Umsetzungsprodukte mit niedermolekularen Polyolen, wie z.B. Trimethylolpropan, Uretdiongruppen-aufweisende Diisocyanate auf Basis von 2,4- oder 2,6-Toluylendiisocyanat, 1-Isocyanato-3,3,5-trimethyl-5-isocyanatomethyl-cyclohexan (IPDI), Hexamethylendiisocyanat (HDI), 4,4'-Diisocyanatodicyclohexylmethan oder Biuretgruppen, Isocyanuratgruppen, Uretdiongruppen, Urethangruppen, Oxadiazintriongruppen und/oder Allophanatgruppen aufweisende Derivate dieser Diisocyanate oder Mischungen daraus.

Besonders bevorzugt sind Polyisocyanate auf Basis von HDI und/oder IPDI, wie z.B. Uretdion-, Biuret- oder Isocyanuratgruppen enthaltende Polyisocyanate.

In einer ganz besonders bevorzugten Ausführungsform der vorliegenden Erfindung ist das Isocyanat ein Isocyanurat aus Hexamethylendiisocyanat, z.B. Desmodur®N 3300.

Das NCO-reaktive Silan der Formel (I) ist vorzugsweise ein Aminosilan, besonders bevorzugt 3-Aminopropyl-triethoxysilan

H₂N-CH₂CH₂CH₂-Si(OC₂H₅)₃

und/oder

H₂N-CH₂CH₂CH₂-Si(OCH₃)₃

Die erfindungsgemäßen Reaktionsprodukte A) werden vorzugsweise durch die Reaktion einer Isocyanatgruppen-haltigen Verbindung mit primären oder sekundären Amino- oder Hydroxysilanen nach US-A-3.632.557 oder EP-A 676 403 erhalten.

Carbosilan-Dendrimere mit kondensationsvernetzenden Endgruppen B) im Sinne der Erfindung sind dabei vorzugsweise Verbindungen der Formel (II)

R₄₋ᵢSi[(CH₂)ₙSiXₐR₃₋ₐ]ᵢ

mit n = 2-10, a = 1-3, i = 3 oder 4 und R = gegebenenfalls substituierte C₁-C₁₈-Alkyl- und/oder gegebenenfalls substituierte C₆-C₁₀-Arylreste, wobei n innerhalb des Moleküls gleich oder ungleich, bevorzugt gleich, sein kann und
X=OH, [(CH₂)ₙSi(OH)R₂], [(CH₂)ₙSiR₃₋ₐ[(CH₂)ₙSi(OH)R₂]ₐ] oder [(CH₂)ₙSiR₃₋ₐ[(CH₂)ₙSiR₃₋ₐ[(CH₂)ₙSi(OH)R₂]ₐ] ist,
mit der Maßgabe, daß
für X = OH a = 1 ist und
für X = [(CH₂)ₙSi(OH)R₂],
[(CH₂)ₙSiR₃₋ₐ[(CH₂)ₙSi(OH)R₂]ₐ]
oder [(CH₂)ₙSiR₃₋ₐ[(CH₂)ₙSiR₃₋ₐ[(CH₂)ₙSi(OH)R₂]ₐ] a Werte von 1 und 3 annehmen kann.

Der Begriff substituiert im Sinne der Erfindung umfaßt alle gängigen Substituenten, wie z.B. Halogen, Alkyl, Aminogruppen usw.

Ausformuliert entsprechen die erfindungsgemäßen Carbosilan-Dendrimere den Formeln (IIa-IId)

R₄₋ᵢSi[(CH₂)ₙSi(OH)R₂]ᵢ oder (IIa)

R₄₋ᵢSi[(CH₂)ₙSiR₃₋ₐ(CH₂)ₙSi(OH)R₂]ₐ]ᵢ (IIb)

oder

R₄₋ᵢSi[(CH₂)ₙSiR₃₋ₐ[(CH₂)ₙSiR₃₋ₐ[(CH₂)ₙSi(OH)R₂]ₐ]ₐ]ᵢ (IIc)

oder

R₄₋ᵢSi[(CH₂)ₙSiR₃₋ₐ[(CH₂)ₙSiR₃₋ₐ[(CH₂)ₙSiR₃₋ₐ[(CH₂)ₙSi(OH)R₂]ₐ]ₐ]ₐ]ᵢ, (IId).

In einer bevorzugten Ausführungsform der vorliegenden Erfindung ist n = 2.

Besonders bevorzugt sind Carbosilan-Dendrimere der Formeln Si[(CH₂)₂Si(OH)(CH₃)₂]₄ oder Si[(CH₂)₂Si[(CH₂)₂Si(OH)(CH₃)₂]₃]₄.

In einer weiteren Ausführung der vorliegenden Erfindung weisen die Carbosilan-Dendrimere hydrolysierbare und kondensationsvernetzende Endgruppen auf, wie z.B. in WO 94/06 807 beschrieben.

Als Carbosilan-Dendrimere mit hydrolysierbaren und kondensationsvernetzenden Endgruppen B) sind Verbindungen der Formel (III)

R₄₋ᵢSi[(CH₂)ₙSiXₐR₃₋ₐ]ᵢ

mit n = 2-10, a, b unabhängig voneinander = 1-3, i = 3 oder 4 und R, R' = unabhängig voneinander, gegebenenfalls substituierte C₁-C₁₈-Alkyl- und/oder gegebenenfalls substituierte C₆-C₁₀-Arylreste, wobei n innerhalb des Moleküls gleich oder ungleich, bevorzugt gleich, sein kann und
X = OR', [(CH₂)ₙSi(OR')_{b}R_{3-b}], [(CH₂)ₙSiR₃₋ₐ[(CH₂)ₙSi(OR')_{b}R_{3-b}]ₐ] oder [(CH₂)ₙSiR₃₋ₐ[(CH₂)ₙSiR₃₋ₐ[(CH₂)ₙSi(OR')_{b}R_{3-b}]ₐ] ist, bevorzugt.

Diese werden vor oder während ihres Einsatzes in den erfindungsgemäßen Mischungen nach gängigen Methoden hydrolysiert.

Der Begriff substituiert im Sinne der Erfindung umfaßt alle gängigen Substituenten, wie z.B. Halogen, Alkyl, Aminogruppen usw..

Die OR'-funktionellen Carbosilan-Dendrimere werden vorzugsweise vor oder während der Zugabe der Komponente A) gegebenenfalls in Gegenwart eines Katalysators und/oder Lösungsmittels hydrolysiert.

Die in den erfindungsgemäßen Mischungen eingesetzten Carbosilan-Dendrimere, werden gemäß DE-A-19 517 839.4 oder gemäß WO 94/06 807 hergestellt.

In einer bevorzugten Ausführungsform enthält die erfindungsgemäße Mischung je nach späterer Verwendung Zusatzstoffe C) wie z.B. Pigmente, Entlüftungsmittel, wie z.B. Benzoin und/oder Katalysatoren, wie z.B. organische oder anorganische Säuren oder metallorganische Verbindungen, wie z.B. Zinnseifen, Verlaufshilfsmittel, Lichtschutzmittel, wie z.B. sterisch gehinderte Amine (HALS), Benztriazole.

Pigmente als Zusatzstoffe C) sind dann vorzugsweise in Mengen von 0,1 bis 100 Gew.-%, bevorzugt bis 60 Gew.-%, Entlüftungsmittel, Katalysatoren, Verlaufshilfs- und/oder Lichtschutzmittel in Mengen von vorzugsweise 0,1 bis 5 Gew.-%, bezogen auf die Summe aus A) und B), vorhanden.

Bei der Umsetzung von Isocyanaten mit NCO-reaktiven Silanen ist das Molverhältnis von Isocyanatgruppen zu NH₂, NHR¹ oder OH-Gruppen des reaktiven Silans vorzugsweise kleiner oder gleich 1, besonders bevorzugt von 0,1 bis 1, ganz besonders bevorzugt 1.

In der erfindungsgemäßen Mischungen beträgt das Mengenverhältnis der Reaktionsprodukte aus Isocyanaten mit NCO-reaktiven Silanen A) zu den Carbosilan-Dendrimeren B) vorzugsweise 10 zu 90 bis 90 zu 10, besonders bevorzugt 30 zu 70 bis 70 zu 30.

Das Verhältnis von A) und B) zueinander ist gekennzeichnet durch das Verhältnis der Si-OR⁴-Gruppen der Komponente A) zu den Si-OH- und/oder SiOR'-Gruppen der Komponente B), wobei das Molverhältnis OR⁴/OH und/oder SiOR' vorzugsweise 0,1 bis 10, besonders bevorzugt 0,8 bis 5, ganz besonders bevorzugt 1 bis 2 beträgt.

Die erfindungsgemäßen Mischungen können durch Mischen von A) mit B) und gegebenenfalls C) hergestellt werden.

Diese Mischung kann anschließend von Hand oder vorzugsweise mit geeigneten Mühlen gemahlen werden.

Die Herstellung der Mischung aus A), B) und gegebenenfalls C) erfolgt vorzugsweise durch deren Homogenisierung in einem Extruder und anschließendes Aufschmelzen und Mahlen der erstarrten Schmelze.

Gegenstand der vorliegenden Erfindung ist zudem ein Verfahren zur Herstellung von Pulverlacken auf Basis der erfindungsgemäßen Gemische, wonach die Einzelkomponenten A), B) und gegebenenfalls C) aufgeschmolzen, als Flüssigkeit intensiv durchmischt und anschließend abgekühlt werden.

Gegenstand der vorliegenden Erfindung ist zudem die Verwendung der erfindungsgemäßen Mischung als Pulverlack sowie als Klebstoff.

Bei der Verwendung als Pulverlack können die Komponenten A) und B) als Pulver auf einer zu beschichtenden Oberfläche, z.B. mit einer elektrostatischen Sprüheinrichtung aufgebracht und dann bei höherer Temperatur, vorzugsweise bei 120°C bis 220°C zu einem Film ausgehärtet werden. Eine andere Verfahrensweise besteht darin, daß man die Mischung aus A) und B) bei 120°C aufschmilzt und die Schmelze dann mit einem geeigneten Beschichtungsgerät auf das Substrat aufstreicht und bei 120°C bis 220°C aushärtet.

Die Härtungstemperaturen können z.B.120°C bis 220°C, bevorzugt 140°C bis 180°C betragen.

Die Härtungszeiten können je nach Temperatur unterschiedlich sein und betragen z.B. von 10 Minuten bis 180 Minuten.

Die erhaltenen Beschichtungen sind lösungsmittelfest, kratzfest und unpigmentiert transparent, zeigen ein sehr gutes Haftverhalten auf verschiedenen Oberflächen, wie z.B. Glas, Metallen und Kunststoffen (Polycarbonate).

Die Mischung der Komponenten A) und B) und gegebenenfalls C) eignet sich auch hervorragend zur Verklebung von Oberflächen. Dazu beschichtet man zwei Oberflächen mit der geschmolzenen Mischung aus A) und B) und gegebenenfalls C) vorzugsweise bei 120°C und fügt anschließend die beschichteten Flächen zusammen. Nach der Aushärtung unter den obengenannten Bedingungen sind die Oberflächen fest miteinander verklebt.

Die nachfolgenden Beispiele dienen der Erläuterung der Erfindung.

Die Erfindung ist jedoch nicht auf die Beispiele beschränkt.

### Experimenteller Teil

### Herstellung der Komponente A1:

### Vorbemerkung

Das eingesetzte Si[(CH₂)₂SiClMe₂]₄ konnte durch Hydrosilylierung von Tetravinylsilan mit HSiCl Me₂ gemäß DE-A-19 517 839 erhalten werden.

19,5 g Desmodur ®N3300 (NCO-Äquivalent 195 g/mol) wurden bei Raumtemperatur unter Stickstoff vorgelegt. Unter Rühren wurde dann 22,1 g 3-Aminopropyl-triethoxysilan (0,1 mol) in 10 Minuten zugetropft. Das Reaktionsgemisch wurde nach der exothermen Reaktion 3 Stunden auf 100°C erwärmt. Nach dem Erkalten isolierte man einen hellgelben, festen Rückstand, der zu Pulver zermahlen wurde.
Erweichungspunkt: ca. 100°C
Si-Gehalt: 6,65 % (Theorie 6,7 %)
IR: keine NCO-Gruppen erkennbar
Ausbeute: 41 g

### Synthese von Si[(CH₂)₂Si(OH)Me₂]₄, Komponente B 1

Zu 8,5 g (84,0 mmol) Triethylamin und 1,62 g (90,0 mmol) Wasser in 300 ml Diethylether tropfte man innerhalb von 30 Minuten eine Lösung von 10,0 g (19,5 mmol) Si[(CH₂)₂SiClMe₂]₄ aus in 20 ml Diethylether. Das gebildete Triethylaminhydrochlorid fiel dabei als weißer Niederschlag an. Nach der Zugabe rührte man noch 1 Stunde und filtrierte dann den Feststoff ab. Das Filtrat wurde im Vakuum vom Lösungsmittel befreit. Der so erhaltene farblose Feststoff wurde in THF gelöst und langsam unter kräftigem Rühren in 500 ml Hexan getropft. Das Produkt fiel dabei als feiner, weißer Niederschlag an, welcher nach Abfiltrieren und einmaligem Waschen mit Hexan nicht mehr weiter gereinigt werden mußte.

Es wurde ein stabiler Feststoff erhalten.
Schmelzpunkt: 144°C.

### Elementaranalyse:

| | C | H | O | Si |
|---|---|---|---|---|
| Ber.: | 43,58 % | 10,06 % | 14,51 % | 31,85 % |
| Gef.: | 43,6 % | 10,1 % | 14,2 % | 32,1 % (Diff.) |

C₁₆H₄₄O₄Si₅ M = 440,951 g/mol
NMR: (DMSO-d₆)
¹H: δ = 0,0 ppm (s, 6H, SiCH₃); 0,39 ppm (m, 4H, Si(CH₂)₂Si); 5,21 ppm (s, 1H, SiOH).
¹³C{¹H}: δ = -0,63 ppm (s, SiCH₃); 1,93 ppm (s, Si(CH₂)₄); 9,77 ppm (s, Si(OH)CH₂).
²⁹Si{¹H}: δ = 14,26 ppm (s, Si(CH₂)₄); 16,33 ppm (s, SiOH).

### Beispiel 1

5 g Komponente A1 (= 0,036 mol = OC₂H₅-Gruppen) und 3,94 g Komponente B1 (= 0,036 mol OH-Gruppen) wurden feingemahlen bei 100 bis 120°C aufgeschmolzen und auf 0,6 mm dickes Blech in 15 µm Schichtdicke aufgebracht. Die Beschichtung wurde 1 Stunde bei 160°C ausgehärtet

| Eigenschaften: | |
|---|---|
| Gitterschnittest (ISO 2409) | 0 |
| Erichsen Tiefung (ISO 1520) | 9 mm |
| Impact (ASTM D 2794-93) | 80 inch.lb |

### Beispiel 2

Die Mischung aus Beispiel 1 wurde analog in 15 µm auf Glas aufgebracht und in 1 Stunde bei 160°C ausgehärtet.

| Eigenschaften: | |
|---|---|
| Gitterschnittest (ISO 2409) | 0 |
| Pendelhärte: (DIN 53 157) | 160 sek |

### Beispiel 3

Die Mischung aus Beispiel 1 wurde analog in 15 µm auf eine Polycarbonatoberfläche aufgebracht und 1 Stunde bei 160°C ausgehärtet.

| Eigenschaften: | |
|---|---|
| Gitterschnittest (ISO 2409) | 0 |
| Sandrieseltest (Trübung nach ASTM D 1003) | 5,3 % |
| Vergleich unbeschichtete Polycarbonatoberfläche | 35 % |

### Beispiel 4

Die Mischung aus Beispiel 1 wurde analog auf zwei Aluminiumflächen in 15 µm Dicke aufgebracht. Die zwei Flächen wurden zusammengefügt und 1 Stunde bei 160°C getempert. Nach dem Abkühlen waren die beiden Aluminiumteile fest miteinander verklebt.

## Patentansprüche

1. Mischungen, enthaltend A) mindestens ein Reaktionsprodukt aus mindestens einem Isocyanat mit mindestens einem NCO-reaktiven Silan der Formel I
Y-R²-Si(R³)ₙ(OR⁴)₃₋ₙ
mit
Y = NHR¹,OH mit
R¹ = H, C₁-C₁₈-Alkyl, C₅-C₈-Cycloalkyl, C₆-C₁₀-Aryl, C₇-C₁₂-Aralkyl,
R² = C₁-C₅-Alkylen
R³, R⁴ = C₁-C₁₈-Alkyl oder Alkoxyalkylen mit bis zu 5 Kohlenstoffatomen, n = 0, 1, 2,
und B) mindestens ein Carbosilan-Dendrimer mit kondensationsvernetzenden Endgruppen.

2. Mischungen nach Anspruch 1, **dadurch gekennzeichnet, daß** das Isocyanat ein Polyisocyanat auf Basis von Hexamethylendiisocyanat und/oder 1-Isocyanato-3,3,5-trimethyl-5-isocyanatomethyl-cyclohexan ist.

3. Mischungen nach Anspruch 1, **dadurch gekennzeichnet, daß** das NCO-reaktive Silan
NH₂-CH₂CH₂CH₂-Si(OC₂H₅)₃
und/oder
NH₂-CH₂CH₂CH₂-Si(OCH₃)₃
ist.

4. Mischungen nach Ansprüchen 1 bis 3, **dadurch gekennzeichnet, daß** die Carbosilan-Dendrimere mit kondensationsvernetzenden Endgruppen Verbindungen der Formel (II)
R₄₋ᵢSi[(CH₂)ₙSiXₐR₃₋ₐ]ᵢ
mit n = 2-10, a = 1-3, i = 3 oder 4 und R = gegebenenfalls substituierte C₁-C₁₈-Alkyl- und/oder gegebenenfalls substituierte C₆-C₁₀-Arylreste sind, wobei n innerhalb des Moleküls gleich oder ungleich sein kann und
X = OH, [(CH₂)ₙSi(OH)R₂], [(CH₂)ₙSiR₃₋ₐ[(CH₂)ₙSi(OH)R₂]ₐ] oder [(CH₂)ₙSiR₃₋ₐ[(CH₂)ₙSiR₃₋ₐ[(CH₂)ₙSi(OH)R₂]ₐ] ist, mit der Maßgabe, daß
für X = OH a=1 ist und
für X = [(CH₂)ₙSi(OH)R₂], [(CH₂)ₙSiR₃₋ₐ[(CH₂)ₙSi(OH)R₂]ₐ] oder [(CH₂)ₙSiR₃₋ₐ[(CH₂)ₙSiR₃₋ₐ[(CH₂)ₙSi(OH)R₂]ₐ] a Werte von 1 und 3 annehmen kann.

5. Mischungen nach einem der Ansprüche 1 bis 4, **dadurch gekennzeichnet, daß** das Carbosilan-Dendrimer Si[(CH₂)₂Si(OH)(CH₃)₂]₄ oder Si[(CH₂)₂Si[(CH₂)₂Si(OH)(CH₃)₂]₄ ist.

6. Mischungen nach einem der Ansprüche 1 bis 3, **dadurch gekennzeichnet, daß** die Carbosilan-Dendrimere mit kondensationsvernetzenden Endgruppen B) Verbindungen der Formel (III)
R₄₋ᵢSi[(CH₂)ₙSiXₐR₃₋ₐ]ᵢ
mit n = 2-10, a, b unabhängig voneinander = 1-3, i = 3 oder 4 und R, R' = unabhängig voneinander gegebenenfalls substituierte C₁-C₁₈-Alkylund/oder gegebenenfalls substituierte C₆-C₁₀-Arylreste, wobei n innerhalb des Moleküls gleich oder ungleich sein kann und
X = OR', [(CH₂)ₙSi(OR')_{b}R_{3-b}], [(CH₂)ₙSiR₃₋ₐ[(CH₂)ₙSi(OR')_{b}R_{3-b}]ₐ] oder [(CH₂)ₙSiR₃₋ₐ[(CH₂)ₙSiR₃₋ₐ[(CH₂)ₙSi(OR')_{b}R_{3-b}]ₐ] ist, sind, die vor oder während der Zugabe der Komponente A) hydrolisiert werden.

7. Mischungen, nach einem der Ansprüche 1 bis 6, **dadurch gekennzeichnet, daß** sie die Zusatzstoffe C) Pigmente, Entlüftungsmittel, Verlaufshilfsmittel, Lichtschutzmittel und/oder Katalysatoren enthalten.

8. Mischungen nach einem der Ansprüche 1 bis 7, **dadurch gekennzeichnet, daß** das Mengenverhältnis von A) zu B) 10:90 bis 90:10 beträgt.

9. Verfahren zur Herstellung von Pulverlackmischungen aus Mischungen nach einem der Ansprüche 1 bis 7, **dadurch gekennzeichnet, daß** die Einzelkomponenten A), B) und gegebenenfalls C) aufgeschmolzen, als Flüssigkeit intensiv durchmischt und anschließend abgekühlt werden.

10. Verwendung der Mischungen nach einem der Ansprüche 1 bis 5 als Pulverlack.

11. Verwendung der Mischungen nach einem der Ansprüche 1 bis 8 als Klebstoff.

## Claims

1. Mixtures, containing A) at least one reaction product from at least one isocyanate and at least one NCO-reactive silane of the formula I
Y-R²-Si(R³)ₙ(OR⁴)₃₋ₙ
where
Y = NHR¹,OH where
R¹ = H, C₁-C₁₈-alkyl, C₅-C₈-cycloalkyl, C₆-C₁₀-aryl, C₇-C₁₂-aralkyl,
R²= C₁-C₅-alkylene
R³, R⁴ = C₁-C₁₈-alkyl or alkoxyalkylene with up to 5 carbon atoms, n = 0, 1, 2,
and B) at least one carbosilane dendrimer with condensation-crosslinking terminal groups.

2. Mixtures according to Claim 1, **characterised in that** the isocyanate is a polyisocyanate based on hexamethylene diisocyanate and/or 1-isocyanato-3,3,5-trimethyl-5-isocyanatomethyl-cyclohexane.

3. Mixtures according to Claim 1, **characterised in that** the NCO-reactive silane is
NH₂-CH₂CH₂CH₂-Si(OC₂H₅)₃
and/or
NH₂-CH₂CH₂CH₂-Si(OCH₃)₃.

4. Mixtures according to Claims 1 to 3, **characterised in that** the carbosilane dendrimer with condensation-crosslinking terminal groups are compounds of the formula (II)
R₄₋ᵢSi[(CH₂)ₙSiXₐR₃₋ₐ]ᵢ
where n = 2-10, a = 1-3, i = 3 or 4 and R = optionally substituted C₁-C₁₈-alkyl and/or optionally substituted C₆-C₁₀-aryl groups, wherein n within the molecule may be identical or different, and
X = OH, [(CH₂)ₙSi(OH)R₂], [(CH₂)ₙSiR₃₋ₐ[(CH₂)ₙSi(OH)R₂]ₐ] or [(CH₂)ₙSiR₃₋ₐ[(CH₂)ₙSiR₃₋ₐ[(CH₂)ₙSi(OH)R₂]ₐ];
with the proviso that
if X = OH, a=1 and
if X = [(CH₂)ₙSi(OH)R₂], [(CH₂)ₙSiR₃₋ₐ[(CH₂)ₙSi(OH)R₂]ₐ] or [(CH₂)ₙSiR₃₋ₐ[(CH₂)ₙSiR₃₋ₐ[(CH₂)ₙSi(OH)R₂]ₐ], a may have values of 1 or 3.

5. Mixtures according to one of Claims 1 to 4,**characterised in that** the carbosilane dendrimer is Si[(CH₂)₂Si(OH)(CH₃)₂]₄ or Si[(CH₂)₂Si[(CH₂)₂Si(OH)(CH₃)₂]₄.

6. Mixtures according to one of Claims 1 to 3, **characterised in that** the carbosilane dendrimers with condensation-crosslinking terminal groups B) are compounds of the formula (III)
R₄₋ᵢSi[(CH₂)ₙSiXₐR₃₋ₐ]ᵢ
where n = 2-10, a, b independently of each other = 1-3, i = 3 or 4 and R, R' = independently of each other optionally substituted C₁-C₁₈-alkyl and/or optionally substituted C₆-C₁₀-aryl groups, wherein n within the molecule may be identical or different and
X = OR', [(CH₂)ₙSi(OR')_{b}R_{3-b}], [(CH₂)ₙSiR₃₋ₐ[(CH₂)ₙSi(OR')_{b}R_{3-b}]ₐ] or [(CH₂)ₙSiR₃₋ₐ[(CH₂)ₙSiR₃₋ₐ[(CH₂)ₙSi(OR')_{b}R_{3-b}]ₐ], which are hydrolysed before or during addition to component A).

7. Mixtures according to one of Claims 1 to 6, **characterised in that** they contain additives C) pigments, degassing agents, flow control agents, light stabilisers and/or catalysts.

8. Mixtures according to one of Claims 1 to 7, **characterised in that** the ratio by amounts of A) to B) is 10:90 to 90:10.

9. A process for preparing powder coating mixtures comprising mixtures according to one of Claims 1 to 7, **characterised in that** the individual components A), B) and optionally C) are melted, very thoroughly mixed as a liquid and then cooled.

10. Use of mixtures according to one of Claims 1 to 5 as powder coatings.

11. Use of mixtures according to one of Claims 1 to 8 as adhesives.

## Revendications

1. Mélanges contenant A) au moins un produit de réaction d'au moins un isocyanate avec au moins un silane réactif avec les groupes NCO, de formule I
Y-R²-Si(R³)ₙ(OR⁴)₃₋ₙ
dans laquelle
Y = NHR¹, OH, avec
R¹ = H, alkyle en C₁-C₁₈, cycloalkyle en C₅-C₈, aryle en C₆-C₁₀, aralkyle en C₇-C₁₂,
R² = alkylène en C₁-C₅
R³, R⁴ = alkyle en C₁-C₁₈ ou alcoxyalkylène contenant jusqu'à 5 atomes de carbone, n = 0, 1, 2,
et B) au moins un dendrimère de carbosilane à groupes terminaux réticulant par condensation.

2. Mélanges selon la revendication 1, **caractérisés en ce que** l'isocyanate est un polyisocyanate à base de l'hexaméthylènediisocyanate et/ou du 1-isocyanato-3,3,5-triméthyl-5-isocyanatométhyl-cyclohexane

3. Mélanges selon la revendication 1, **caractérisés en ce que** le silane réactif avec les groupes NCO est
H₂N-CH₂CH₂CH₂-Si(OC₂H₅)₃
et/ou
H₂N-CH₂CH₂CH₂-Si(OCH₃)₃.

4. Mélanges suivant les revendications 1 à 3, **caractérisés en ce que** les dendrimères de carbosilane à groupes terminaux réticulant par condensation sont des composés de formule (II)
R₄₋ᵢSi[(CH₂)ₙSiXₐR₃₋ₐ]ᵢ
avec n = 2-10, a = 1-3, i = 3 ou 4 et R = alkyle en C₁-C₁₈ éventuellement substitué et/ou aryle en C₆-C₁₀ éventuellement substitué, n pouvant avoir des valeurs identiques ou différentes à l'intérieur de la molécule et X = OH, [(CH₂)ₙSi(OH)R₂], [(CH₂)ₙSiR₃₋ₐ[(CH₂)ₙSi(OH)R₂]ₐ] ou [(CH₂)ₙSiR₃₋ₐ[(CH₂)ₙSiR₃₋ₐ[(CH₂)ₙSi(OH)R₂]ₐ],
sous réserve que
lorsque X = OH a = 1 et
lorsque X = [(CH₂)ₙSi(OH)R₂], [(CH₂)ₙSiR₃₋ₐ[(CH₂)ₙSi(OH)R₂]ₐ] ou [(CH₂)ₙSiR₃₋ₐ[(CH₂)ₙSiR₃₋ₐ[(CH₂)ₙSi(OH)R₂]ₐ] a peut prendre les valeurs de 1 à 3.

5. Mélanges selon l'une des revendications 1 à 4, **caractérisés en ce que** le dendrimère de carbosilane est Si[(CH₂)₂Si(OH)(CH₃)₂]₄ ou Si[(CH₂)₂Si[(CH₂)₂Si(OH)(CH₃)₂]₃]₄.

6. Mélanges selon l'une des revendications 1 à 3, **caractérisés en ce que** les dendrimères de carbosilanes à groupes terminaux réticulant par condensation B) sont des composés de formule (III)
R₄₋ᵢSi[(CH₂)ₙSiXₐR₃₋ₐ]ᵢ
dans laquelle n = 2-10, a, b, indépendamment l'un de l'autre = 1-3, i = 3 ou 4 et R, R', indépendamment l'un de l'autre = alkyle en C₁-C₁₈ éventuellement substitué et/ou aryle en C₆-C₁₀ éventuellement substitué, n pouvant prendre des valeurs identiques ou différentes à l'intérieur de la molécule et
X = OR', [(CH₂)ₙSi(OR')_{b}R_{3-b}], [(CH₂)ₙSiR₃₋ₐ[(CH₂)ₙSi(OR')_{b}R_{3-b}]ₐ], ou [(CH₂)ₙSiR₃₋ₐ[(CH₂)ₙSiR₃₋ₐ[(CH₂)ₙSi(OR')_{b}R_{3-b}]ₐ],
qu'on hydrolyse avant ou durant l'addition du composant A).

7. Mélanges selon l'une des revendications 1 à 6, **caractérisés en ce que** les additifs C) contiennent des pigments, des agents désaérants, des produits auxiliaires d'étalement, des agents de protection contre la lumière et/ou des catalyseurs.

8. Mélanges selon l'une des revendications 1 à 7, **caractérisés en ce que** les proportions relatives A):B) vont de 10:90 à 90:10.

9. Procédé pour la préparation de vernis en poudre mélangés à partir des mélanges selon l'une des revendications 1 à 7, **caractérisés en ce que** l'on fond les composants individuels, A), B) et le cas échéant C), on les soumet à mélange intensif à l'état liquide puis on refroidit.

10. Utilisation des mélanges selon l'une des revendications 1 à 5, en tant que vernis en poudre.

11. Utilisation des mélanges selon l'une des revendications 1 à 8, en tant que colles.
